# FASCICULE DE BREVET EUROPEEN

(11) **EP 4 664 371 B1**
(45) Date de publication et mention de la délivrance du brevet: **29.07.2026**
(21) Numéro de dépôt: 25158965.1
(22) Date de dépôt: 19.02.2025
(51) Int. Cl.: G06Q 10/04, G06Q 50/06, H02J 3/14

(54) **PROCEDES ET DISPOSITIFS DE GESTION D'UNE INSTALLATION CLIENT D'UN RESEAU DE DISTRIBUTION DE RESSOURCES**
VERFAHREN UND VORRICHTUNGEN ZUR VERWALTUNG EINER KUNDENANLAGE EINES RESSOURCENVERTEILUNGSNETZES
METHODS AND DEVICES FOR MANAGING A CLIENT FACILITY OF A RESOURCE DISTRIBUTION NETWORK

(30) Priorité: 14.06.2024 FR 2406355
(43) Date de publication de la demande: 17.12.2025
(73) Titulaire: SAGEMCOM ENERGY & TELECOM SAS, 92270 Bois-Colombes (FR)
(72) Inventeur: TEBOULLE, Henri, 92270 Bois-Colombes (FR); MOULAI, Mohand, 92270 Bois-Colombes (FR); TEIXEIRA MARTINS, Nuno, 92270 Bois-Colombes (FR)
(74) Mandataire: Novagraaf Technologies

(56) Documents cités:
- US-A1- 2020 082 289
- US-A1- 2022 244 076

## Description

### DOMAINE TECHNIQUE

Les différents exemples de réalisation décrits dans la présente divulgation concernent un réseau de distribution d'une ressource, par exemple un réseau de distribution d'électricité, de gaz de chaleur..., ainsi que les installations client d'un tel réseau, notamment les compteurs.

### ARRIERE PLAN

L'intensité carbone de la production d'électricité est une mesure qui indique la quantité de dioxyde de carbone (CO2) émise par unité produite. Elle est généralement exprimée en grammes de CO2 par kilowattheure (g CO2/kWh). Cette mesure permet d'évaluer l'impact environnemental de différentes sources d'énergie utilisées pour la production.

L'intensité carbone varie considérablement selon les types de technologies et de combustibles utilisés. Par exemple, pour la production d'électricité, les énergies renouvelables comme l'éolien, le solaire, et l'hydroélectrique ont une très faible intensité carbone, souvent proche de zéro. Les sources d'énergie nucléaire ont également une faible intensité carbone, bien qu'il y ait des émissions associées au cycle de vie du combustible nucléaire et à la construction des centrales. En revanche, les centrales thermiques à combustibles fossiles, comme celles qui brûlent du charbon, du pétrole ou du gaz naturel, ont une intensité carbone élevée en raison des grandes quantités de CO2 émises lors de la combustion de ces combustibles.

La réduction de l'intensité carbone est un objectif clé pour les politiques énergétiques visant à lutter contre le changement climatique, en encourageant le déploiement de technologies plus propres et plus efficaces.

Le document US 2022/0244076A1 concerne un système de contrôle distribué de réseau électrique et notamment de véhicules électriques et de dispositifs de stockage d'énergie. Le document US 2020/0082289A1 décrit un système de recommandation de période d'exécution de tâches utilisant de l'énergie.

### RESUME

Un premier aspect concerne un procédé de gestion d'un réseau de distribution d'une ressource produite par des moyens de production connus à l'avance, dans un réseau de distribution comportant des installations client qui comportent chacune un compteur, et un serveur d'information qui comporte un module gestionnaire de données de comptage et une tête de réseau pour communiquer avec les installations client. Le compteur est configuré pour mesurer une consommation de la ressource par le client et transmettre au serveur d'information des informations client représentatives de la consommation du client. Le module gestionnaire de données de comptage est configuré pour déterminer une courbe de prévisionnelle globale pour tous les clients à partir desdites informations client. Le procédé comporte des étapes, exécutées par le serveur d'information, pour :
- déterminer une prévision d'intensité carbone de production de ressource pour au moins une période de temps, en fonction de la courbe de charge prévisionnelle et de la capacité fournie par les moyens de production utilisés,
- transmettre à une ou plusieurs installations client une information permettant de contrôler lesdites installations client sur ladite au moins une période de temps en fonction de la prévision d'intensité carbone,
l'information transmise comportant ou étant destinée à être utilisée pour déterminer, une commande de délestage destinée à un dispositif domotique, configuré pour gérer l'installation client, pour diminuer ou stopper le fonctionnement d'un ou plusieurs équipements de l'installation client qui en fonctionnement consomment ladite ressource.

Dans un premier mode de réalisation du procédé de gestion d'un réseau de distribution, l'information transmise comporte la commande de délestage, et la commande de délestage est transmise par une interface de programmation applicative du serveur d'information à un point d'accès internet de l'installation client.

Dans un second mode de réalisation du procédé de gestion d'un réseau de distribution, l'information transmise comporte la prévision d'intensité carbone. Elle est transmise au compteur de l'installation client via un réseau de télécommunication afin que le compteur puisse déterminer la commande de délestage et la transmettre au dispositif domotique.

Un second aspect concerne un procédé de gestion d'une installation client d'un réseau de distribution d'une ressource produite par des moyens de production connus à l'avance, dans un réseau comportant des installations client qui comportent chacune un compteur, et un serveur d'information qui comporte un module gestionnaire de données de comptage et une tête de réseau pour communiquer avec les installations clients. Le compteur est configuré pour mesurer une consommation de la ressource par le client et transmettre au serveur d'information des informations client représentatives de la consommation du client. Le module gestionnaire de données de comptage est configuré pour déterminer une courbe de charge prévisionnelle globale pour tous les clients à partir desdites informations client. Le procédé comporte des étapes pour :
- recevoir du serveur d'information une information comportant une prévision d'intensité carbone de production de ressource pour au moins une période de temps, la prévision d'intensité carbone étant déterminée en fonction de la courbe de charge prévisionnelle et de la capacité fournie par les moyens de production utilisés,
- traiter l'information reçue pour permettre un contrôle de l'installation client sur ladite au moins une période de temps en fonction de la prévision d'intensité carbone,
l'étape pour traiter l'information reçue comporte une détermination, ou une transmission de l'information reçue en vue de la détermination, d'une commande de délestage destinée à un dispositif domotique configuré pour gérer l'installation client, pour ladite au moins une période de temps, pour diminuer ou stopper le fonctionnement d'un ou plusieurs équipements de l'installation client qui en fonctionnement consomment ladite ressource.

Dans un premier mode de réalisation du procédé de gestion de l'installation client, l'étape pour traiter l'information reçue comporte une détermination de la commande de délestage et une transmission de la commande de délestage à un dispositif domotique de l'installation client configuré pour gérer l'installation client.

Dans un second mode de réalisation du procédé de gestion de l'installation client, l'étape pour traiter l'information reçue comporte une transmission de la prévision d'intensité carbone à un dispositif de télé-information connecté au compteur et configuré pour déterminer la commande de délestage et pour la transmettre au dispositif domotique .

Avantageusement, le procédé de gestion de l'installation client comporte une étape d'affichage d'une ou plusieurs données représentatives de la prévision d'intensité carbone sur un module d'affichage du compteur ou sur un module d'affichage déporté.

Un troisième aspect concerne un procédé de gestion d'une installation client d'un réseau de distribution d'une ressource produite par des moyens de production connus à l'avance, dans un réseau comportant des installations client qui comportent chacune un compteur, et un serveur d'information qui comporte un module gestionnaire de données de comptage et une tête de réseau pour communiquer avec les installations clients. Et dans lequel le compteur est configuré pour mesurer une consommation de la ressource par le client et transmettre au serveur d'information des informations client représentatives de la consommation du client. Et le module gestionnaire de données de comptage est configuré pour déterminer une courbe de charge prévisionnelle globale pour tous les clients à partir desdites informations client. Le procédé comporte des étapes pour :
- recevoir d'un compteur de l'installation client une prévision d'intensité carbone de production de ressource pour au moins une période de temps, la prévision d'intensité carbone étant déterminée en fonction de la courbe de charge prévisionnelle et de la capacité fournie par les moyens de production utilisés,
- déterminer, à partir de la prévision d'intensité carbone reçue, une commande de délestage pour ladite au moins une période de temps, pour diminuer ou stopper le fonctionnement d'un ou plusieurs équipements de l'installation client qui en fonctionnement consomment ladite ressource,
- transmettre la commande de délestage à un dispositif domotique configuré pour gérer l'installation client.

Un quatrième aspect concerne un dispositif serveur d'information comportant des moyens pour la mise en œuvre d'un procédé de gestion d'un réseau de distribution d'une ressource tel que décrit plus haut.

Un cinquième aspect concerne un compteur comportant des moyens pour la mise en œuvre d'un procédé de gestion d'une installation client tel que décrit plus haut.

Un sixième aspect concerne un dispositif de télé-information comportant des moyens pour la mise en œuvre d'un procédé de gestion d'un réseau de distribution d'une ressource tel que décrit plus haut.

Les dispositifs serveur d'information, compteur et dispositif de télé-information peuvent être constitués par des moyens logiciels, c'est-à-dire des instructions destinées à être exécutées par un ensemble de circuits pour effectuer une ou plusieurs ou toutes les opérations ou étapes à réaliser, en application des procédés décrits dans le présent document. L'ensemble de circuits peut être constitué par une circuiterie dédiée. Il peut aussi être constitué à partir d'un ou plusieurs processeurs et d'une ou plusieurs mémoires comprenant un ou plusieurs codes de programme informatique, lesdits processeurs, mémoires et codes informatiques étant configurés pour amener le serveur d'information, le compteur et/ou dispositif de télé-information à exécuter une ou plusieurs ou toutes les étapes des procédés décrits dans le présent document.

Un septième aspect concerne un produit programme d'ordinateur comportant des instructions qui lorsqu'elles sont exécutées par au moins un processeur causent la mise en œuvre d'un procédé de gestion de réseau distribution ou d'un procédé de gestion d'une installation client tels que décrit plus haut.

Un huitième aspect concerne un support de stockage non transitoire lisible par un ordinateur comportant des instructions qui lorsqu'elles sont exécutées par un processeur causent la mise en œuvre d'un procédé de gestion de réseau distribution ou d'un procédé de gestion d'une installation client tels que décrit plus haut.

### BREVE DESCRIPTION DES FIGURES

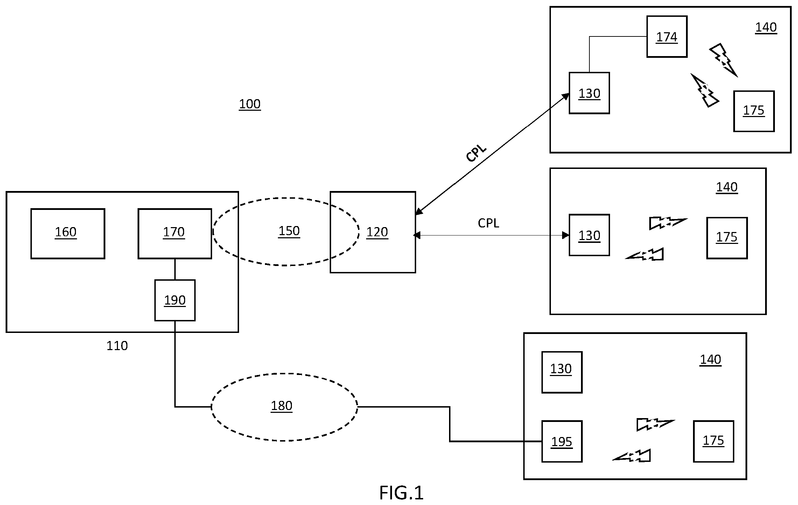

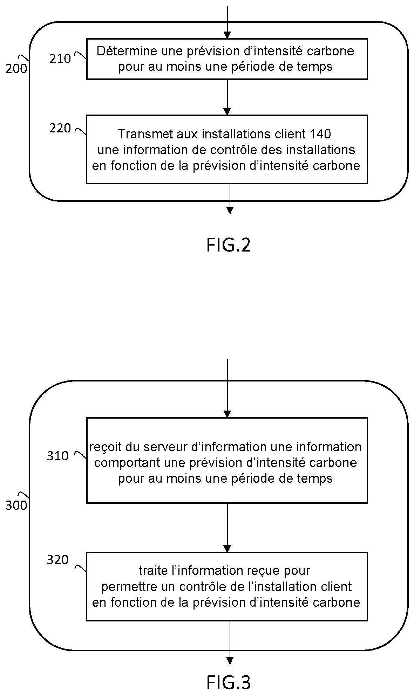

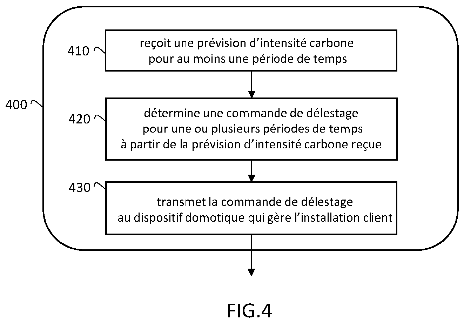

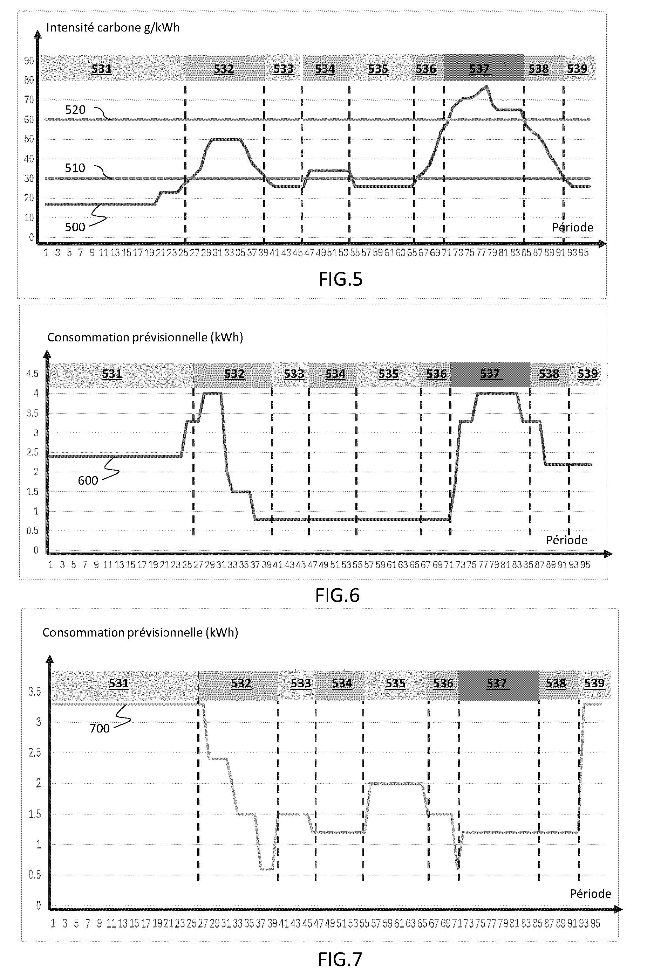

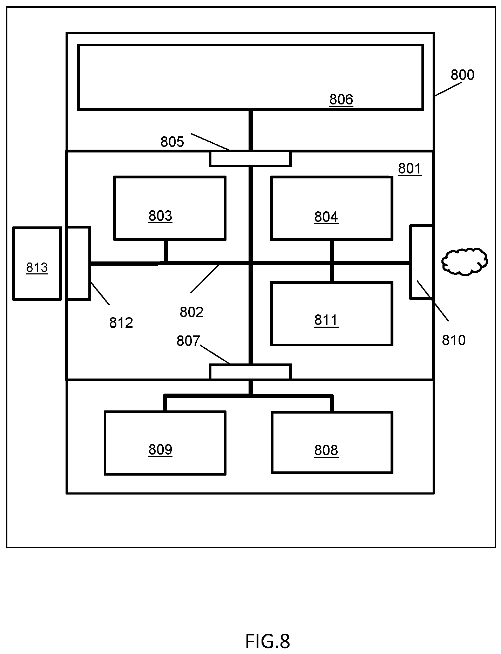

Les exemples de réalisation seront mieux compris à la lumière de la description détaillée qui va suivre et des dessins qui l'accompagnent, lesquels sont donnés à titre d'illustration uniquement et ne sont donc pas limitatifs de la présente divulgation.
La figure FIG.1 est un schéma d'un exemple de système de réseau de distribution d'une ressource.
La figure FIG.2 est un diagramme décrivant les étapes d'un procédé de gestion d'un réseau de distribution de ressource.
La figure FIG.3 est un diagramme décrivant les étapes d'un procédé de gestion d'une installation client d'un réseau de distribution d'une ressource destiné à être exécuté par un compteur d'une installation client du réseau de distribution.
La figure FIG.4 est un diagramme décrivant les étapes d'un procédé de gestion d'une installation client d'un réseau de distribution d'une ressource destiné à être exécuté par un dispositif de télé-information connecté à un compteur d'une installation client du réseau de distribution
La figure FIG.5 représente un exemple de courbe de prévision d'intensité carbone de production en fonction les périodes de la journée.
La figure FIG.6 représente un exemple de courbe de charge pour un client donné lorsque l'intensité carbone de production n'est pas prise en compte.
La figure FIG.7 représente un exemple de courbe de charge pour le même client que celui de la FIG.6 lorsque l'installation client est contrôlée en fonction de la prévision d'intensité carbone représentée à la FIG.5.
La figure FIG.8 est un schéma blocs d'un dispositif de mise en œuvre d'un serveur d'information, d'un compteur et/ ou d'un dispositif de télé-information tel que décrit dans le présent document.

### DESCRIPTION DETAILLEE

Divers exemples de réalisation vont maintenant être décrits plus en détail, à titre d'exemples non limitatifs, en référence aux dessins qui accompagnent la présente divulgation et qui illustrent certains exemples de réalisation.

Les détails structurels et fonctionnels spécifiques décrits ici constituent des exemples non limitatifs. Les exemples de réalisation décrits ici peuvent faire l'objet de diverses modifications et formes alternatives. L'objet de la divulgation peut être réalisé sous de nombreuses formes différentes et ne doit pas être interprété comme étant limité aux seules réalisations présentées ici à titre d'exemples illustratifs. Il convient de comprendre qu'il n'y a aucune intention de limiter les modes de réalisation aux formes particulières décrites dans la suite de ce document.

Dans la description qui va suivre, des éléments identiques, similaires ou analogues seront désignés par les mêmes chiffres de référence. Les diagrammes blocs, algorigrammes et diagrammes de séquence de messages dans les figures illustrent l'architecture, les fonctionnalités et le fonctionnement de systèmes, dispositifs, procédés et produits programmes d'ordinateur selon un ou plusieurs exemples de réalisation. Chaque bloc d'un diagramme bloc ou chaque phase d'un algorigramme peut représenter un module ou encore une portion de code logiciel comprenant des instructions pour l'implémentation d'une ou plusieurs fonctions. Selon certaines implémentations, l'ordre des blocs ou des phases peut être changé, ou encore les fonctions correspondantes peuvent être mises en œuvre en parallèle. Les blocs ou phases de procédé peuvent être implémentés à l'aide de circuits, de logiciels ou d'une combinaison de circuits et de logiciels, et ce de façon centralisée, ou de façon distribuée, pour tout ou partie des blocs ou phases. Les systèmes, dispositifs, procédés et méthodes décrits peuvent être modifiés, faire l'objet d'ajouts et/ou de suppressions tout en restant dans le cadre de la présente description. Par exemple, les composants d'un dispositif ou d'un système peuvent être intégrés ou séparés. Également, les fonctions décrites peuvent être mises en œuvre à l'aide de plus ou de moins de composants ou de phases, ou encore avec d'autres composants ou à travers d'autres phases. Tout système de traitement de données adapté peut être utilisé pour l'implémentation. Un système ou dispositif de traitement de données adapté comprend par exemple une combinaison de code logiciel et de circuits, tels un processeur, contrôleur ou autre circuit adapté pour exécuter le code logiciel. Lorsque le code logiciel est exécuté, le processeur ou contrôleur conduit le système ou dispositif à mettre en œuvre tout ou partie des fonctionnalités des blocs et/ou des phases des procédés ou méthodes selon les exemples de réalisation. Le code logiciel peut être stocké dans une mémoire non volatile ou sur un support de stockage non volatile (clé USB, carte mémoire ou autre support) lisible directement ou à travers une interface adaptée par le processeur ou contrôleur.

La présente divulgation s'applique à tout réseau de distribution d'une ressource comportant au moins un serveur d'information et une pluralité de compteurs mesurant la consommation de ladite ressource. Il peut s'agir par exemple d'un réseau de distribution d'électricité, de gaz, de chaleur, etc...

Dans l'exemple non limitatif de la FIG.1, un réseau de distribution de ressource 100 comporte au moins un serveur d'information 110 qui est prévu pour communiquer via un sous-répartiteur 120 avec une pluralité de compteurs 130 qui sont installés chez des clients 140. Par exemple, le serveur d'information 110 communique avec le sous-répartiteur 120 via un réseau de télécommunication sans fil 150. Le réseau de communication sans fil 150 peut être un réseau GPRS, UMTS, LTE, 5G, ou un réseau à bande étroite loT (de l'anglais Internet-of-Things). Par exemple le sous-répartiteur 120 communique avec les compteurs 130 via le réseau électrique par courant porteur en ligne (CPL). Par exemple, l'échange de données entre les compteurs 130 et la tête de réseau 170 se fait par trames de données conformes au protocole DLMS/COSEM.

Les installations client 140 comportent des équipements qui en fonctionnement consomment la ressource distribuée par le réseau de distribution.

Le serveur d'information 110 comporte par exemple un module gestionnaire de données de comptage 160 (connu sous l'acronyme MDM de l'anglais « Meter Data Management ») et une tête de réseau 170 qui gère les protocoles de communications pour communiquer avec les installations client 140.

Dans certains modes de réalisation, l'installation client 140 comporte outre le compteur 130, un dispositif de télé-information 174 qui est connecté au compteur 130 et qui est configuré pour communiquer avec un dispositif domotique 175. Le dispositif domotique 175 est un dispositif client configuré pour gérer l'installation client.. Par exemple la communication entre le compteur 130 et le dispositif de télé-information est une communication série en mode asynchrone avec codage ASCII à une vitesse de 1200 ou 9600 bit/s.

Alternativement, le compteur 130 est configuré pour communiquer directement avec le dispositif domotique 175. Dans ce cas, la communication avec le dispositif domotique 175 se fait par exemple en Wi-Fi.

La tête de réseau 170 peut aussi communiquer avec le compteur 130 de l'installation client 140 par le réseau internet 180. Dans ce cas, le serveur d'information comporte une interface de programmation d'application (API) dédiée 190 qui communique avec un point d'accès internet 195 de l'installation client. Le point d'accès internet de l'installation client permet alors de router l'information vers le dispositif domotique 175, par exemple en Wi-Fi.

Les compteurs 130 sont configurés pour mesurer une consommation par le client 140, de la ressource qui est distribuée par le réseau de distribution. Par exemple, lorsque le réseau est un réseau de distribution d'électricité, le compteur 130 mesure la consommation d'électricité.

Chacun des compteurs 130 est en outre configuré pour transmettre au serveur d'information 110 des informations client représentatives de la consommation du client 140 sur une plage de temps déterminée.

Par exemple les compteurs 130 transmettent tous les jours des informations représentatives de leur consommation journalière. Ces informations client comportent par exemple une valeur de consommation par tranche de temps d'une durée déterminée, par exemple toutes les 15mn. Les valeurs transmises pour chaque tranche de temps de 15mn dans la journée permettent d'établir une courbe de charge pour le client pour la journée. Ce mode de réalisation permet de tenir compte des différences de profils de consommation en fonction du jour de la semaine.

Le module gestionnaire de données de comptage 160 peut ainsi déterminer une courbe de charge prévisionnelle globale pour tous les clients, à partir des données de consommation remontées par chaque client, par exemple pour chaque jour de la semaine.

Par ailleurs, l'intensité carbone de production dépend de la capacité à utiliser de manière efficace les énergies renouvelables, et de la nécessité de devoir produire ou importer d'autres sources d'énergie considérées comme non-vertes pour répondre à la demande.

Le serveur d'information 110 connaît à l'avance (par exemple 6 h à l'avance dans le mode de réalisation décrit ici) les moyens de production utilisés et la capacité qu'ils peuvent fournir. Il peut donc déterminer une prévision d'intensité carbone de production de ressource, en fonction de la courbe de charge prévisionnelle, par exemple pour les 6 h à venir, par tranche de 15mn.

La figure FIG.2 est un organigramme représentant les principales étapes d'un procédé 200 de gestion d'un réseau de distribution de ressource tel que décrit ici. A l'étape 210, le serveur d'information 110 (par exemple le module gestionnaire de données de comptage 160 du serveur d'information 110) détermine une prévision d'intensité carbone de production de ressource pour au moins une période de temps, par exemple pour les 6h avenir découpée en tranches de 15mn. Puis à l'étape 220, le serveur d'information 110 transmet à une ou plusieurs installations client 140 une information permettant de contrôler lesdites installations client en fonction de la prévision d'intensité carbone.

Par exemple, lorsque la tête de réseau 170 communique avec le compteur 130 de l'installation client 140 par le réseau internet 180, l'information transmise comporte une commande de délestage destinée au dispositif domotique 175.

Dans un autre exemple, lorsque la tête de réseau 170 communique avec le compteur 130 de l'installation client 140 via le réseau de télécommunications 150, l'information transmise comporte la prévision d'intensité carbone, et le compteur 130 est configuré pour traiter l'information reçue afin de permettre un contrôle de l'installation client 140 en fonction de la prévision d'intensité carbone.

La figure FIG.3 est un organigramme représentant les principales étapes d'un procédé 300 de gestion d'une installation client d'un réseau de distribution d'une ressource, destiné à être exécuté par le compteur 130. Il comporte une étape 310 pour recevoir du serveur d'information une information comportant une prévision d'intensité carbone de production de ressource pour au moins une période de temps, et une étape 320 pour traiter l'information reçue pour permettre un contrôle de l'installation client en fonction de la prévision d'intensité carbone.

Dans un premier mode de réalisation, l'étape 320 comporte une détermination d'une commande de délestage pour une ou plusieurs périodes de temps à partir de la prévision d'intensité carbone, et une transmission de la commande de délestage au dispositif domotique 175 qui est configuré pour gérer l'installation client 140.

Dans un second mode de réalisation l'étape 320 comporte une transmission de la prévision d'intensité carbone au dispositif de télé-information 174 est configuré pour déterminer une commande de délestage pour une ou plusieurs périodes de temps à partir de la prévision d'intensité carbone, et pour la transmettre au dispositif domotique 175.

Par exemple, le dispositif domotique 175 peut être configuré pour répercuter ou non une commande délestage reçue, et/ou pour appliquer différentes modalités de délestage en fonction d'un ou plusieurs critères.

La figure FIG.4 est un organigramme représentant les principales étapes d'un autre procédé 400 de gestion d'une installation client d'un réseau de distribution de ressource. Ce procédé est destiné à être exécuté par le dispositif de télé-information 174. Il comporte une étape 410 pour recevoir du compteur 130 une prévision d'intensité carbone de production de ressource pour au moins une période de temps, une étape 420 pour déterminer une commande de délestage pour une ou plusieurs périodes de temps à partir de la prévision d'intensité carbone reçue, et une étape 430 pour transmettre la commande de délestage au dispositif domotique qui configuré pour gérer l'installation client 140.

Sur la figure FIG.5, la courbe 500 représente un exemple de prévision d'intensité carbone de production en fonction les périodes de la journée (96 périodes de 15 mn dans une journée). On a représenté deux seuils 510 et 520 qui, dans cet exemple, correspondent à une valeur de 30 gCO2/kWh et de 60 gCO2/kWh respectivement. Ainsi, trois types de périodes peuvent être définies au cours de la journée : un premier type de période où l'intensité carbone prévue est inférieure ou égale au premier seuil 510 (périodes 531, 533, 535 et 539 représentées en gris clair sur la figure 5), un deuxième type de période où l'intensité carbone prévue est comprise entre le premier seuil 510 et le second seuil 520 (périodes 532, 534, 536 et 538 représentées en gris moyen sur la figure 5), et un troisième type de période où l'intensité carbone prévue est supérieure ou égale au second seuil 520 (période 537 représentées en gris foncé sur la figure 5).

Dans un mode de réalisation, en plus de déterminer et transmettre une commande délestage, une ou plusieurs données représentatives de la prévision d'intensité carbone sont affichées sur un module d'affichage du compteur 130 ou sur un module d'affichage déporté, par exemple au niveau du dispositif domotique 175, ou un téléphone mobile, une tablette etc... Dans un mode de réalisation, une ou plusieurs diodes sont allumées sur le compteur 130 indiquant le type de période en cours, par exemple une diode verte pour les périodes du premier type, une diode orange pour les périodes du second type et une diode rouge pour les périodes du troisième type. Alternativement, il est possible d'utiliser une diode multicolore pouvant prendre 3 couleurs différentes (vert, orange ou rouge), ou de faire varier le rétroéclairage d'un écran intégré au compteur (par exemple, rétroéclairage éteint pour les périodes du premier type, clignotement lent (par exemple 0.5 Hz) pour les périodes du second type, clignotement rapide (par exemple 2 Hz) pour les périodes du troisième type. L'utilisation d'un écran déporté permet d'afficher une information plus précise, par exemple une courbe de l'évolution de la prévision de l'intensité carbone de production.

L'affichage d'information permet par exemple au client d'intervenir lui-même directement sur son installation, par exemple de couper les radiateurs pour réduire sa consommation.

Sur la figure FIG.6, la courbe 600 représente un exemple de courbe de charge pour un client donné lorsque l'intensité carbone de production n'est pas prise en compte. Le client a une consommation importante pendant les périodes 532 et 537 ce qui n'est pas optimal du point de vue de l'intensité carbone produite.

Sur la figure FIG.7 la courbe 700 représente un exemple de courbe de charge pour le même client lorsque l'installation client est contrôlée en fonction de la prévision d'intensité carbone.

Par exemple, pendant la période 537 (troisième type), une commande de délestage est appliquée pour diminuer ou stopper le fonctionnement des équipements à forte consommation (tel que le chauffage ou les équipements de production d'eau chaude) et la mise en fonctionnement d'équipements additionnels est reportée (par exemple un lave-linge, un sèche-linge, le rechargement d'une voiture électrique). Alors que pendant la période 532 (deuxième type), la mise en fonctionnement d'équipements additionnels est reportée mais aucun délestage n'est réalisé. Comme illustré sur la figure FIG.7, la consommation diminue pendant les deux périodes 532 et 537 et augmente pendant les autres périodes.

Dans l'exemple ci-dessus on a décrit deux seuils et trois types de périodes. Il s'agit d'un exemple non limitatif. Il est bien entendu possible de ne définir qu'un seul seuil et deux types de périodes, ou au contraire de définir plus de deux seuils et plus de trois types de périodes. Il est aussi possible d'ajouter d'autres critères de gestion de l'installation client, par exemple de tenir compte, en plus du ou des seuils d'intensité carbone, d'un seuil de consommation du client. Le dispositif domotique 175 peut ainsi être configuré pour mettre en œuvre une ou plusieurs modalités de délestage, en fonction des critères de gestion qui ont été configurés.

Le serveur d'information 110, les compteurs 130, les dispositifs de télé-information 174 peuvent par exemple être implémentés sous la forme d'un dispositif tel que décrit sur la figure FIG.8. Ce dispositif référencé 800 comprend une carte de circuit imprimé 801 sur laquelle un bus de communication 802 relie un processeur 803, une mémoire vive 804, un support de stockage 811, éventuellement une interface 805 pour connecter un écran 806, une série de connecteurs 807 pour connecter des dispositifs ou des modules d'interface utilisateur tels qu'une souris ou un trackpad 808 et un clavier 809, une ou plusieurs interfaces de communication 810 et/ou 812 ; Certains modules de la figure FIG.8 peuvent être internes ou connectés à l'extérieur, auquel cas ils ne font pas nécessairement partie intégrante du dispositif lui-même. Par exemple, l'écran 806 peut être un écran qui n'est connecté au dispositif 800 que dans des circonstances spécifiques, ou le dispositif 800 peut être contrôlé par un autre appareil doté d'un écran, et dans ce cas le dispositif 800 ne comporte aucun écran 806 ni aucune interface 805. Selon les fonctionnalités requises, notamment selon que le dispositif 800 est utilisé dans une tête de réseau 170, un compteur 130, ou un dispositif de télé-information 174 le dispositif peut ne mettre en œuvre qu'une partie de ce qui précède. Par exemple, un compteur 130 et un dispositif de télé-information 174 ne sont en général pas connecté à une souris, un trackpad ou un clavier.

La mémoire 811 contient un ou plusieurs codes logiciels qui, lorsqu'ils sont exécutés par le processeur 803, permettent au dispositif 800 d'exécuter les procédés décrits ci-dessus. Dans un mode de réalisation donné à titre d'exemple, un support de stockage amovible 813, tel qu'une clé USB, peut également être connecté. Par exemple, le support de stockage détachable 813 peut contenir les codes logiciels à télécharger dans la mémoire 811.

Le processeur 803 peut être n'importe quel type de processeur tel qu'une unité centrale de traitement ("CPU") ou un microprocesseur dédié tel qu'un microcontrôleur intégré ou un processeur de signal numérique ("DSP").

Le dispositif 800 peut également comprendre d'autres composants que l'on trouve généralement dans les systèmes informatiques, tels qu'un système d'exploitation, des gestionnaires de file d'attente, des pilotes de périphériques ou un ou plusieurs protocoles de réseau qui sont stockés dans la mémoire 811 et exécutés par le processeur 803.

Les personnes du métier comprendront que tous les schémas fonctionnels présentés ici représentent des vues conceptuelles, données à titre d'exemple, de circuits incorporant les principes de la divulgation.

Chaque fonction, bloc, étape décrit peut être mis en œuvre dans du matériel, des logiciels, des microprogrammes, des intergiciels, des microcodes ou toute combinaison appropriée de ceux-ci. S'ils sont mis en œuvre dans un logiciel, les fonctions ou blocs des schémas fonctionnels et des organigrammes peuvent être mis en œuvre par des instructions de programme d'ordinateur/codes de logiciel, qui peuvent être stockés ou transmis sur un support lisible par ordinateur, ou chargés sur un ordinateur à usage général, un ordinateur à usage spécial ou un autre appareil de traitement programmable et/ou un système, de sorte que les instructions de programme d'ordinateur ou les codes de logiciel qui s'exécutent sur l'ordinateur ou un autre appareil de traitement programmable créent les moyens de mettre en œuvre les fonctions décrites dans la présente description.

Bien que les aspects de la présente divulgation aient été décrits en référence à des réalisations particulières, il convient de comprendre que ces réalisations ne font qu'illustrer les principes et les applications de la présente divulgation. Il est donc entendu que de nombreuses modifications peuvent être apportées aux modes de réalisation illustratifs et que d'autres arrangements peuvent être conçus sans s'écarter de l'esprit et de la portée de la divulgation tels que déterminés sur la base des revendications et de leurs équivalents.

Les avantages et les solutions aux problèmes ont été décrits ci-dessus en ce qui concerne des modes de réalisation spécifiques de l'invention. Cependant, les avantages, les bénéfices, les solutions aux problèmes, et tout élément qui peut causer ou résulter en de tels avantages, bénéfices ou solutions, ou causer de tels avantages, bénéfices ou solutions à devenir plus prononcés ne doivent pas être interprétés comme une caractéristique ou un élément critique, requis, ou essentiel de l'une ou de l'ensemble des revendications.

## Revendications

1. Procédé de gestion d'un réseau de distribution d'une ressource produite par des moyens de production connus à l'avance, le réseau de distribution comportant des installations client (140) qui comportent chacune un compteur (130), et un serveur d'information (110) qui comporte un module gestionnaire de données de comptage (160) et une tête de réseau (170) pour communiquer avec les installations client (140), le compteur étant configuré pour mesurer une consommation de la ressource par le client et transmettre au serveur d'information des informations client représentatives de la consommation du client, le module gestionnaire de données de comptage (160) étant configuré pour déterminer une courbe de charge prévisionnelle globale pour tous les clients à partir desdites informations client, **caractérisé en ce qu'**il comporte des étapes, exécutées par le serveur d'information, pour :
- déterminer (210) une prévision d'intensité carbone de production de ressource pour au moins une période de temps, en fonction de la courbe de charge prévisionnelle et de la capacité fournie par les moyens de production utilisés,
- transmettre (220) à une ou plusieurs installations client une information permettant de contrôler lesdites installations client sur ladite au moins une période de temps en fonction de la prévision d'intensité carbone, l'information transmise comportant ou étant destinée à être utilisée pour déterminer, une commande de délestage destinée à un dispositif domotique (175), configuré pour gérer l'installation client, pour diminuer ou stopper le fonctionnement d'un ou plusieurs équipements de l'installation client qui en fonctionnement consomment ladite ressource.

2. Procédé selon la revendication 1, **caractérisé en ce que** l'information transmise comporte la commande de délestage, et **en ce qu'**elle est transmise par une interface de programmation applicative du serveur d'information à un point d'accès internet de l'installation client.

3. Procédé selon la revendication 1, **caractérisé en ce que** l'information transmise comporte la prévision d'intensité carbone, et **en ce qu'**elle est transmise au compteur de l'installation client via un réseau de télécommunication afin que le compteur puisse déterminer la commande de délestage et la transmettre au dispositif domotique (175).

4. Procédé de gestion d'une installation client d'un réseau de distribution d'une ressource produite par des moyens de production connus à l'avance, ledit réseau comportant des installations client (140) qui comportent chacune un compteur (130), et un serveur d'information (110) qui comporte un module gestionnaire de données de comptage (160) et une tête de réseau (170) pour communiquer avec les installations clients, le compteur étant configuré pour mesurer une consommation de la ressource par le client et transmettre au serveur d'information des informations client représentatives de la consommation du client, le module gestionnaire de données de comptage (160) étant configuré pour déterminer une courbe de charge prévisionnelle globale pour tous les clients à partir desdites informations client, **caractérisé en ce qu'**il comporte des étapes pour :
- recevoir (310) du serveur d'information une information comportant une prévision d'intensité carbone de production de ressource pour au moins une période de temps, la prévision d'intensité carbone étant déterminée en fonction de la courbe de charge prévisionnelle et de la capacité fournie par les moyens de production utilisés,
- traiter (320) l'information reçue pour permettre un contrôle de l'installation client sur ladite au moins une période de temps en fonction de la prévision d'intensité carbone, ladite étape pour traiter l'information reçue (320) comportant une détermination, ou une transmission de l'information reçue en vue de la détermination, d'une commande de délestage destinée à un dispositif domotique configuré pour gérer l'installation client, pour ladite au moins une période de temps, pour diminuer ou stopper le fonctionnement d'un ou plusieurs équipements de l'installation client qui en fonctionnement consomment ladite ressource.

5. Procédé selon la revendication 4, **caractérisé en ce que** l'étape (320) pour traiter l'information reçue (320) comporte une détermination de la commande de délestage, et une transmission de la commande de délestage au dispositif domotique (175)..

6. Procédé selon la revendication 4, **caractérisé en ce que** l'étape (320) pour traiter l'information reçue comporte une transmission de la prévision d'intensité carbone à un dispositif de télé-information (174) connecté au compteur (130) et configuré pour déterminer, la commande de délestage et pour la transmettre au dispositif domotique (175) .

7. Procédé selon l'une des revendications 4 à 6, **caractérisé en ce qu'**il comporte une étape d'affichage d'une ou plusieurs données représentatives de la prévision d'intensité carbone sur un module d'affichage du compteur ou sur un module d'affichage déporté.

8. Procédé de gestion d'une installation client d'un réseau de distribution d'une ressource produite par des moyens de production connus à l'avance, ledit réseau comportant des installations client (140) qui comportent chacune un compteur (130), et un serveur d'information (110) qui comporte un module gestionnaire de données de comptage (160) et une tête de réseau (170) pour communiquer avec les installations clients, le compteur étant configuré pour mesurer une consommation de la ressource par le client et transmettre au serveur d'information des informations client représentatives de la consommation du client, le module gestionnaire de données de comptage (160) étant configuré pour déterminer une courbe de charge prévisionnelle globale pour tous les clients à partir desdites informations client, **caractérisé en ce qu'**il comporte des étapes pour :
- recevoir (410) d'un compteur (130) de l'installation client une prévision d'intensité carbone de production de ressource pour au moins une période de temps, la prévision d'intensité carbone étant déterminée en fonction de la courbe de charge prévisionnelle et de la capacité fournie par les moyens de production utilisés,
- déterminer (420), à partir de la prévision d'intensité carbone reçue, une commande de délestage pour ladite au moins une période de temps, pour diminuer ou stopper le fonctionnement d'un ou plusieurs équipements de l'installation client qui en fonctionnement consomment ladite ressource,
- transmettre (430) la commande de délestage à un dispositif domotique (175) configuré pour gérer l'installation client.

9. Dispositif serveur d'information comportant des moyens pour la mise en œuvre d'un procédé selon l'une des revendications 1 à 3.

10. Dispositif compteur comportant des moyens pour la mise en œuvre d'un procédé selon l'une des revendications 4 à 7.

11. Dispositif de télé-information comportant des moyens pour la mise en œuvre d'un procédé selon la revendication 8.

12. Produit programme d'ordinateur comportant des instructions qui lorsqu'elles sont exécutées par au moins un processeur causent la mise en œuvre d'un procédé selon l'une quelconque des revendications 1 à 8.

13. Support de stockage non transitoire lisible par un ordinateur comportant des instructions qui lorsqu'elles sont exécutées par un processeur causent la mise en œuvre d'un procédé selon l'une quelconque des revendications 1 à 8.

## Patentansprüche

1. Verfahren zum Verwalten eines Verteilungsnetzes einer Ressource, die durch im Voraus bekannte Produktionsmittel produziert wird, das Verteilungsnetz umfassend Kundenanlagen (140), die jeweils einen Zähler (130) umfassen, und einen Informationsserver (110), der ein Verwaltungsmodul für Zähldaten (160) umfasst, und eine Kopfstation (170) zum Kommunizieren mit den Kundenanlagen (140), wobei der Zähler zum Messen eines Verbrauchs der Ressource durch den Kunden und Übertragen, an den Informationsserver, von Kundeninformationen, die den Verbrauch des Kunden abbilden, konfiguriert ist, wobei das Verwaltungsmodul für Zähldaten (160) zum Bestimmen einer Gesamtlastprognosekurve für alle Kunden aus den Kundeninformationen konfiguriert ist, **dadurch gekennzeichnet, dass** es Schritte umfasst, die durch den Informationsserver ausgeführt werden zum:
- Bestimmen (210) einer Kohlenstoffintensitätsprognose der Ressourcenproduktion für mindestens eine Zeitperiode in Abhängigkeit von der Lastprognosekurve und der Kapazität, die durch die verwendeten Produktionsmittel bereitgestellt wird,
- Übertragen (220) an eine oder mehrere Kundenanlagen von Informationen, die es ermöglichen, die Kundenanlagen über die mindestens eine Zeitperiode in Abhängigkeit von der Kohlenstoffintensitätsprognose zu steuern, wobei die übertragenen Informationen einen Lastabwurfbefehl umfassen oder dafür vorgesehen sind, einen solchen zu bestimmen, der für eine Hausautomatisierungsvorrichtung (175) vorgesehen ist, die zum Verwalten der Kundenanlage, zum Verringern oder Stoppen des Betriebs von einer oder mehreren Einrichtungen der Kundenanlage, die im Betrieb die Ressource verbrauchen, konfiguriert ist.

2. Verfahren nach Anspruch 1, **dadurch gekennzeichnet, dass** die übertragenen Informationen den Lastabwurfbefehl umfassen, **und dadurch, dass** sie durch eine Anwendungsprogrammierschnittstelle des Informationsservers an einen Internetzugangspunkt der Kundenanlage übertragen werden.

3. Verfahren nach Anspruch 1, **dadurch gekennzeichnet, dass** die übertragenen Informationen die Kohlenstoffintensitätsprognose umfassen,
**und dadurch, dass** sie an den Zähler der Kundenanlage über ein Telekommunikationsnetz übertragen werden, damit der Zähler den Lastabwurfbefehl bestimmen und diesen an die Hausautomatisierungsvorrichtung (175) übertragen kann.

4. Verfahren zum Verwalten einer Kundenanlage eines Verteilungsnetzes einer Ressource, die durch im Voraus bekannte Produktionsmittel produziert wird, das Netz umfassend Kundenanlagen (140), die jeweils einen Zähler (130) umfassen, und einen Informationsserver (110), der ein Verwaltungsmodul für Zähldaten (160) umfasst, und eine Kopfstation (170) zum Kommunizieren mit den Kundenanlagen, wobei der Zähler zum Messen eines Verbrauchs der Ressource durch den Kunden und Übertragen, an den Informationsserver, von Kundeninformationen, die den Verbrauch des Kunden abbilden, konfiguriert ist, wobei das Verwaltungsmodul für Zähldaten (160) zum Bestimmen einer Gesamtlastprognosekurve für alle Kunden aus den Kundeninformationen konfiguriert ist, **dadurch gekennzeichnet, dass** es Schritte umfasst zum:
- Empfangen (310) von dem Informationsserver, von Informationen, umfassend eine Kohlenstoffintensitätsprognose der Ressourcenproduktion für mindestens eine Zeitperiode, wobei die Kohlenstoffintensitätsprognose in Abhängigkeit von der Lastprognosekurve und der Kapazität, die durch die verwendeten Produktionsmittel bereitgestellt wird, bestimmt wird,
- Verarbeiten (320) der empfangenen Informationen, zum Ermöglichen einer Steuerung der Kundenanlage über die mindestens eine Zeitperiode in Abhängigkeit von der Kohlenstoffintensitätsprognose, der Schritt zum Verarbeiten der empfangenen Informationen (320) umfassend ein Bestimmen oder ein Übertragen der empfangenen Informationen zwecks Bestimmung eines Lastabwurfbefehls, der für eine Hausautomatisierungsvorrichtung vorgesehen ist, die zum Verwalten der Kundenanlage, für die mindestens eine Zeitperiode, zum Verringern oder Stoppen des Betriebs von einer oder mehreren Einrichtungen der Kundenanlage, die im Betrieb die Ressource verbrauchen, konfiguriert ist.

5. Verfahren nach Anspruch 4, **dadurch gekennzeichnet, dass** der Schritt (320) zum Verarbeiten der empfangenen Informationen (320) ein Bestimmen des Lastabwurfbefehls und ein Übertragen des Lastabwurfbefehls an die Hausautomatisierungsvorrichtung (175) umfasst.

6. Verfahren nach Anspruch 4, **dadurch gekennzeichnet, dass** der Schritt (320) zum Verarbeiten der empfangenen Information ein Übertragen der Kohlenstoffintensitätsprognose an eine Fernübertragungsvorrichtung (174) umfasst, die mit dem Zähler (130) verbunden und zum Bestimmen des Lastabwurfbefehls und zum Übertragen dieses an die Hausautomatisierungsvorrichtung (175) konfiguriert ist.

7. Verfahren nach einem der Ansprüche 4 bis 6,
**dadurch gekennzeichnet, dass** es einen Schritt der Anzeige einer oder mehrerer Daten, die die Kohlenstoffintensitätsprognose abbilden, auf einem Anzeigemodul des Zählers oder auf einem entfernten Anzeigemodul umfasst.

8. Verfahren zum Verwalten einer Kundenanlage eines Verteilungsnetzes einer Ressource, die durch im Voraus bekannte Produktionsmittel produziert wird, das Netz umfassend Kundenanlagen (140), die jeweils einen Zähler (130) umfassen, und einen Informationsserver (110), der ein Verwaltungsmodul für Zähldaten (160) umfasst, und eine Kopfstation (170) zum Kommunizieren mit den Kundenanlagen, wobei der Zähler zum Messen eines Verbrauchs der Ressource durch den Kunden und Übertragen, an den Informationsserver, von Kundeninformationen, die den Verbrauch des Kunden abbilden, konfiguriert ist, wobei das Verwaltungsmodul für Zähldaten (160) zum Bestimmen einer Gesamtlastprognosekurve für alle Kunden aus den Kundeninformationen konfiguriert ist, **dadurch gekennzeichnet, dass** es Schritte umfasst zum:
- Empfangen (410), von einem Zähler (130) der Kundenanlage, einer Kohlenstoffintensitätsprognose der Ressourcenproduktion für mindestens eine Zeitperiode, wobei die Kohlenstoffintensitätsprognose in Abhängigkeit von der Lastprognosekurve und der Kapazität, die durch die verwendeten Produktionsmittel bereitgestellt wird, bestimmt wird,
- Bestimmen (420), aus der empfangenen Kohlenstoffintensitätsprognose, eines Lastabwurfbefehls für die mindestens eine Zeitperiode, zum Verringern oder Stoppen des Betriebs von einer oder mehreren Einrichtungen der Kundenanlage, die im Betrieb die Ressource verbrauchen,
- Übertragen (430) des Lastabwurfbefehls an eine Hausautomatisierungsvorrichtung (175), die zum Verwalten der Kundenanlage konfiguriert ist.

9. Informationsservervorrichtung, umfassend Mittel zum Implementieren eines Verfahrens nach einem der Ansprüche 1 bis 3.

10. Zählervorrichtung, umfassend Mittel zum Implementieren eines Verfahrens nach einem der Ansprüche 4 bis 7.

11. Fernübertragungsvorrichtung, umfassend Mittel zum Implementieren eines Verfahrens nach Anspruch 8.

12. Computerprogrammprodukt, umfassend Anweisungen, die, wenn sie durch mindestens einen Prozessor ausgeführt werden, das Implementieren eines Verfahrens nach einem der Ansprüche 1 bis 8 veranlassen.

13. Nichtflüchtiger, computerlesbarer Speicherträger, umfassend Anweisungen, die, wenn sie durch einen Prozessor ausgeführt werden, das Implementieren eines Verfahrens nach einem der Ansprüche 1 bis 8 veranlassen.

## Claims

1. A method for managing a distribution network for a resource produced by production means known in advance, the distribution network comprising customer installations (140) that each comprise a meter (130), and an information server (110) that comprises a metering data manager module (160) and a head-end (170) for communicating with the customer installations (140), the meter being configured to measure consumption of the resource by the customer and to transmit to the information server customer information representative of the customer's consumption, the metering data manager module (160) being configured to determine an overall forecast load curve for all customers on the basis of said customer information, **characterized in that** it comprises steps, performed by the information server, for:
- determining (210) a resource production carbon intensity forecast for at least one period of time on the basis of the forecast load curve and the capacity supplied by the used production means,
- transmitting (220) to one or more customer installations information for controlling said customer installations over said at least one period of time on the basis of the carbon intensity forecast, the transmitted information comprising, or being intended to be used to determine, a load-shedding command intended for a home automation device (175), configured to manage the customer installation, to reduce or stop the operation of one or more pieces of equipment in the customer installation which in operation consume said resource.

2. The method according to claim 1, **characterized in that** the transmitted information comprises the load-shedding command, and **in that** it is transmitted via an application programming interface of the information server to an Internet access point of the customer installation.

3. The method according to claim 1, **characterized in that** the transmitted information comprises the carbon intensity forecast, and **in that** it is transmitted to the meter of the customer installation via a telecommunications network so that the meter can determine the load-shedding command and transmit it to the home automation device (175).

4. A method for managing a customer installation in a distribution network for a resource produced by production means known in advance, said network comprising customer installations (140) that each comprise a meter (130), and an information server (110) that comprises a metering data manager module (160) and a head-end (170) for communicating with the customer installations, the meter being configured to measure consumption of the resource by the customer and to transmit to the information server customer information representative of the customer's consumption, the metering data manager module (160) being configured to determine an overall forecast load curve for all customers on the basis of said customer information, **characterized in that** it comprises steps for:
- receiving (310) from the information server information comprising a resource production carbon intensity forecast for at least one period of time, the carbon intensity forecast being determined on the basis of the forecast load curve and the capacity supplied by the used production means,
- processing (320) the received information for controlling the customer installation over said at least one period of time on the basis of the carbon intensity forecast, said step for processing (320) the received information comprising determining, or transmitting the received information with a view to determining, a load-shedding command intended for a home automation device configured to manage the customer installation, for said at least one period of time, to reduce or stop the operation of one or more pieces of equipment of the customer installation which in operation consume said resource.

5. The method according to claim 4, **characterized in that** the step (320) for processing (320) the received information comprises determining the load-shedding command and transmitting the load-shedding command to the home automation device (175).

6. The method according to claim 4, **characterized in that** the step (320) for processing the received information comprises transmitting the carbon intensity forecast to a remote information device (174) connected to the meter (130) and configured to determine the load-shedding command and to transmit it to the home automation device (175).

7. The method according to any of claims 4 to 6, **characterized in that** it comprises a step of displaying one or more pieces of data representative of the carbon intensity forecast on a display module of the meter or on a remote display module.

8. A method for managing a customer installation in a distribution network for a resource produced by production means known in advance, said network comprising customer installations (140) that each comprise a meter (130), and an information server (110) that comprises a metering data manager module (160) and a head-end (170) for communicating with the customer installations, the meter being configured to measure consumption of the resource by the customer and to transmit to the information server customer information representative of the customer's consumption, the metering data manager module (160) being configured to determine an overall forecast load curve for all customers on the basis of said customer information, **characterized in that** it comprises steps for:
- receiving (410) from a meter (130) of the customer installation a resource production carbon intensity forecast for at least one period of time, the carbon intensity forecast being determined on the basis of the forecast load curve and the capacity supplied by the used production means,
- determining (420), on the basis of the received carbon intensity forecast, a load-shedding command for said at least one period of time, to reduce or stop the operation of one or more pieces of equipment in the customer installation which in operation consume said resource,
- transmitting (430) the load-shedding command to a home automation device (175) configured to manage the customer installation.

9. An information server device comprising means for performing a method according to any of claims 1 to 3.

10. A meter device comprising means for performing a method according to any of claims 4 to 7.

11. A remote information device comprising means for performing a method according to claim 8.

12. A computer program product comprising instructions which, when performed by at least one processor, cause the performance of a method according to any one of claims 1 to 8.

13. A non-transitory computer-readable storage medium comprising instructions which, when performed by a processor, cause the performance of a method according to any one of claims 1 to 8.
